# EUROPEAN PATENT SPECIFICATION

(11) **EP 1 242 720 B1**
(45) Date of publication and mention of the grant of the patent: **21.02.2007**
(21) Application number: 00986149.3
(22) Date of filing: 11.12.2000
(51) Int. Cl.: F01L 1/34, F01L 1/26

(54) **FOUR-STROKE INTERNAL COMBUSTION ENGINE WITH VARIABLE CAM TIMING**
VIERTAKTBRENNKRAFTMASCHINE MIT VARIABLER NOCKENWELLENVERSTELLUNG
MOTEUR A COMBUSTION INTERNE A QUATRE TEMPS A SYNCHRONISATION VARIABLE DES CAMES

(30) Priority: 13.12.1999 SE 9904546
(43) Date of publication of application: 25.09.2002
(73) Proprietor: Ford Global Technologies, LLC, Dearborn, MI 48126 (US)
(72) Inventor: JOHANSSON, Bengt, S-226 47 Lund (SE)
(74) Representative: Hellbom, Lars Olof
(86) International application number: PCT/SE2000/002485
(87) International publication number: WO 2001/042627

(56) References cited:
- EP-A1- 0 640 749
- WO-A1-90/10141
- DE-A1- 3 835 333
- SE-C2- 507 878
- US-A- 5 682 854

## Description

The present invention relates to a four-stroke internal combustion engine for a motor vehicle, said engine having at least one cylinder which has at least two intake valves, at least one exhaust valve and at least two camshafts arranged for controlling the opening and closing of the valves, at least one of said camshafts being coordinated with means for varying the rotational phase shift of the camshaft relative to the rotational phase of a crankshaft driven by a piston in the cylinder, wherein an exhaust channel from each cylinder communicates with the inlet to the turbine of a turbo compressor, the compressor of which has an outlet in communication with an intake channel to the cylinder.

An Otto-engine operates with a fuel-air mixture, which is usually supplied in a premixed state to the engine cylinders. The ratio between the fuel and air flows is kept practically constant, and the torque (the load) is regulated by varying the amounts of both air and fuel. For lower torque, the airflow to the engine is normally reduced by lowering the pressure in the intake manifold with the aid of a throttle. This, however, means that the engine must perform work during the intake stroke since the piston works against a vacuum. The result is that the engine performs pumping work. At low loads with a low absolute pressure in the intake tube, pumping work of up to 0,7 bar can be required. If the engine operates with an effective mean pressure of 2 bar, this means that the gas exchange will represent a loss of 0,7/2,7=0,26, i.e. 26%. By eliminating or in any case substantially reducing the pumping work, a significant increase in efficiency can be achieved, especially at low loads.

It is known in a four-stroke internal combustion engine to regulate the load solely by varying the opening and/or closing times of the intake valves and the opening time interval, so that a throttle in the intake manifold can be eliminated. For this electrically operated, freely controllable intake valves have been used. If delayed closing is selected, a portion of the air which has been drawn into the cylinder during the intake stroke, will, after bottom dead centre during the compression stroke, be pushed back into the intake manifold. The mass in the cylinder is thus determined by the point in time when the valve is closed, using electrically operated, freely controllable valves is, however, a very expensive solution, which has up to now not come into commercial use in vehicle engines.

In a known engine of the type with cam-shaft-controlled valves having means for infinite variation of the rotational phase between one or both camshafts and the engine crankshaft, both of the intake valves are controlled by a single cam shaft, which means that the opening and closing times for both valves will be displaced simultaneously, and this, however, will not affect the combined open duration of the valves. This type of valve control is not used, however, to control the load by phase displacement, but rather to optimize the valve timing at different engine speeds for maximum performance and requires a relatively limited phase displacement, up to at most circa 60 crankshaft degrees, between the camshaft and the crankshaft.

DE-A-38 35 333 discloses an engine described by way of introduction wherein means are provided to regulate the valves depending on the rpm so that both intake valves work synchronously at low rpm and are phase shifted during increasing rpm. Thus, the phase shift is not controlled by the torque requested by the driver of the vehicle.

The purpose of the present invention is to achieve an engine of the type described by way of introduction, in which the torque control can be effected by regulating cam-shaft-controlled valves in such a manner that the need for a throttle with accompanying pumping losses can be eliminated.

This is achieved according to the invention by regulator means which are arranged to regulate the means for varying the rotational phase shift of a camshaft as a function of a torque requested by the vehicle driver in such a manner that the associated intake valve opens and closes at another point in time than the other intake valve when low torque is requested, thereby controlling the torque without using a throttle.

This means, in practice, that the closing of one intake valve is delayed so that it will close during the compression stroke resulting in that a portion of the air-fuel mixture flowing into the cylinder during the intake stroke will be pushed out of the cylinder during the compression stroke.

By virtue of this arrangement it is possible, at least theoretically, to make the combined open time of the two intake valves to be twice as long as in the known valve arrangement, where both intake valves are synchronously controlled by the same camshaft. In practice, however, it has been shown that a phase displacement between the two camshafts on the order of 100 to 120 crankshaft degrees is sufficient for torque control without a throttle.

In a preferred embodiment of the engine according to the invention, the control means are arranged to control the means for varying the rotational phase of the cam-shaft in such a manner that the associated intake valve opens and closes from 0 to at least 100 crankshaft degrees later than the other intake valve when low torque is requested.

The advantage of utilizing a turbo compressor together with the valve arrangement described is that the conventional so-called waste-gate valve can be eliminated. The compressor can be allowed to charge fully at all engine speeds. The charge pressure control is effected in this case by regulating the variable intake valve so that it closes earlier or later, depending on whether the requested torque requires a higher or a lower charge pressure. Further advantages of the described valve- and camshaft arrangement can be achieved in a supercharged engine with two exhaust valves per cylinder and will be described below with reference to the accompanying drawings.

The invention is described in more detail here with reference to examples shown in the accompanying drawings, where:
- Fig. 1a: shows a schematic longitudinal section through an engine according to the invention,
- Fig. 1b: is a corresponding simplified schematic longitudinal section through the engine with means for displacing the rotational phase of one of two camshafts,
- Fig. 2a: is a schematic representation of a portion of the cylinder head of the engine according to the invention,
- Fig. 2b: is a diagram of various lift curves for the valve controlled by the variable camshaft at different rotational phases,
- Fig. 3: is a schematic representation corresponding to Fig. 2a of an engine with a turbo compressor,
- Fig. 4a: is a schematic representation corresponding to Fig. 3 of a second embodiment of an engine with a turbo compressor,
- Figs 4b and: 4c are diagrams of various intake valve lift curves at different rotational phase shifts of the variable camshaft,
- Fig. 5a: is a schematic representation corresponding to Fig. 4a of a third embodiment of an engine with a turbo compressor,
- Figs 5b and 5c: are diagrams of various exhaust valve lift curves at different rotational phase shifts of the variable camshaft,
- Fig. 5d: is a diagram of the intake air pressure at various rotational phase shifts of the variable camshaft,
- Fig. 6: is a schematic representation of one embodiment of an arrangement for torque control, and
- Fig. 7: is a perspective view of one embodiment of a device for varying the rotational phase shift of the camshaft relative to the engine crankshaft.

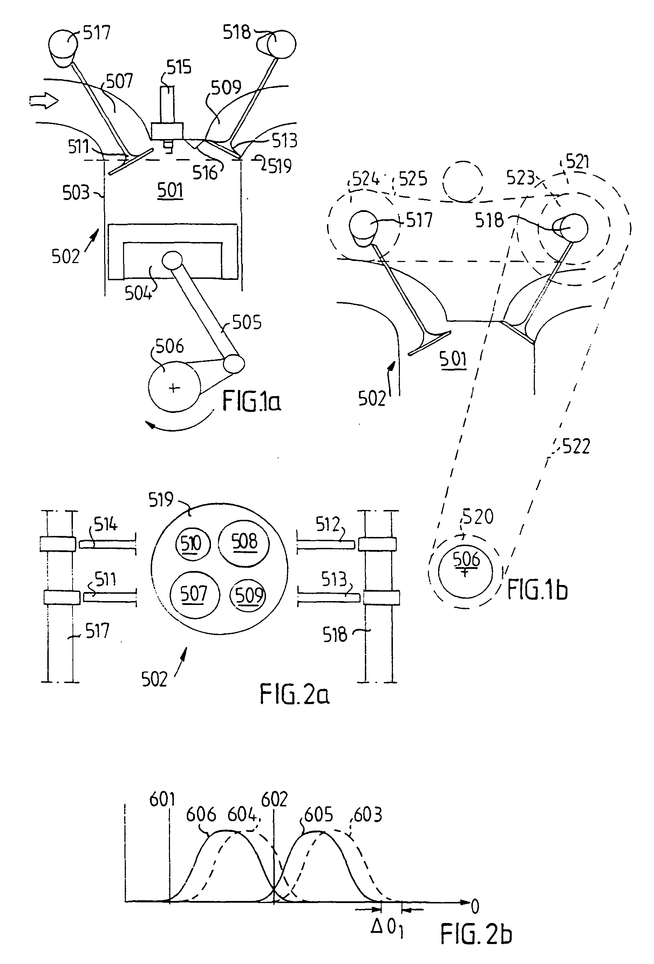

In Figs 1a and 1b, 503 designates a cylinder in a four-stroke internal combustion engine 502 with spark ignition, and 501 designates the cylinder combustion chamber, which is delimited between a cylinder head 519 and a piston 504, which, via a connecting rod 505, is connected to the engine crankshaft 506. Each cylinder has two intake ports 507 and 508 and two exhaust ports 509 and 510, of which only one intake port 507 and one exhaust port 509 are shown in Fig. 1a. Fig. 1a also shows a sparkplug 515 and a fuel injection jet 516.

The intake ports 507 and 508 have, in the conventional manner, a larger diameter than the exhaust ports 509 and 510, as can be seen in Fig. 2a, which also shows intake valves 511 and 512 and exhaust valves 513 and 514 for the respective intake and exhaust ports. A first camshaft 517 is arranged to open and close the intake valve 511 and the exhaust valve 513, while a second camshaft 518 is arranged to open and close the intake valve 512 and the exhaust valve 514.

The camshaft drive of the engine 502 is shown extremely simplified in Fig. 1b. The crankshaft 506 drives, in a conventional manner via a toothed wheel 520 and a toothed belt or chain 522, a camshaft drive 521 on one camshaft 518, which, via a toothed wheel 523 on a rotational phase variator, which will be described in more detail below in connection with Fig. 7, and a toothed belt or chain 525 drives a cam-shaft drive 524 on the second camshaft 517. The rotational speeds of the camshaft drive 521 and the drive 523 on the rotational phase variator are the same, but, by means of the variator, a phase shift can be effected between the drives 521 and 524, and consequently between the camshafts, so that the valve timing of the valves controlled by the camshaft 517 can be displaced relative to the timing of the valves controlled by the camshaft 518.

In order to make it possible in a simple manner to shift the phase between the two intake valves 511 and 512 and, in a four-valve design between the two exhaust valves 513 and 514 as well, the valves are arranged diagonally (crosswise), as is shown in Fig. 2a.

In the embodiment shown in Figs 1a, 1b and 2a of the engine according to the invention, the continuously variable phase shift of the camshaft 517 is used to regulate the engine torque, as is illustrated in the diagram in Fig. 2b, which shows the valve lift as a function of the crankshaft angle θ, where 601 represents bottom dead centre BDC of the piston after the expansion stroke. In the figure, 602 represents top dead centre TDC. The valve lift curves for the variable intake valve 511 and the variable exhaust valve 514 are illustrated by dashed lines 603 and 604, respectively, while the lift curves of the corresponding fixed valves 512 and 514 are illustrated by the solid lines 605 and 606 in Fig. 2b. At low load (low torque), which means a sma-fuel-air mass in the combustion chamber 501, the rotational phase of the camshaft 517 is retarded by an angle of up to circa 110°, e.g. 30°, relative to the crankshaft. Consequently, the intake valve 511 closes late during the compression stroke, within 40° - 150°, e.g. circa 70°, after BDC. The consequence of this is that a portion of the fuel-air mixture, which originally filled the combustion chamber 501, will be pressed back out through the inlet port 507 during the first portion of the compression stroke. In Fig. 2b, this is illustrated by the delay of the opening and closing of the valve pair 511 and 514 by an angle Δθ₁, e.g. 30°, from the valve pair 512 and 513, and since the inlet is unthrottled, the piston does not need to exert any pumping energy, which will result in increased efficiency.

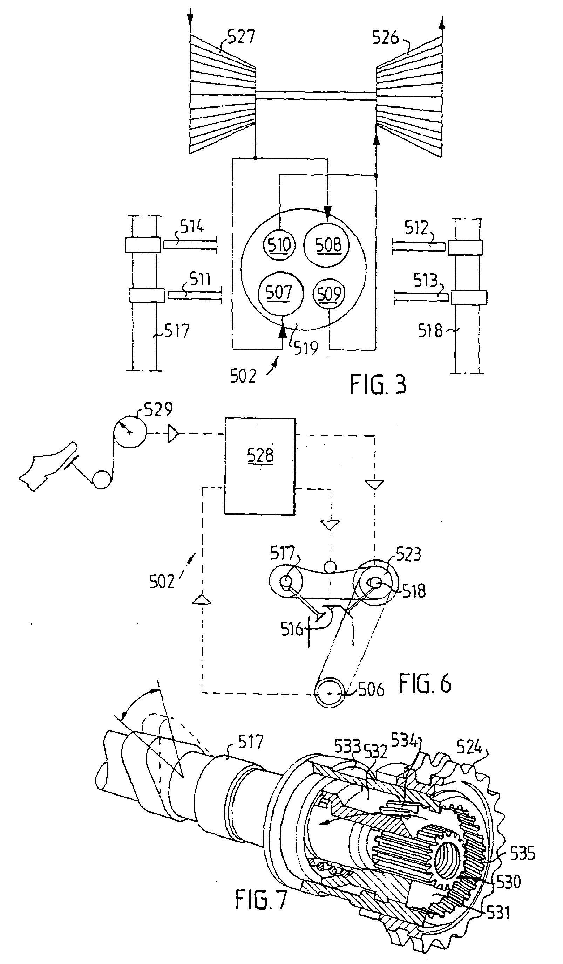

Fig. 3 shows an embodiment of the engine according to the invention, which differs from that described above and shown in Fig. 2a only in that it is equipped with a turbo compressor comprising an exhaust turbine 526 and a compressor 527 driven by the turbine. Details corresponding to those in Fig. 2a have been given the same reference numerals in Fig. 3 as in Fig. 2a. in the embodiment shown, the entire exhaust mass is led from the two exhaust ports 509 and 510 through the turbine 526. Instead of controlling the charge pressure of the compressor with the aid of a conventional waste-gate valve in a by-pass conduit past the turbine, the compressor is in this case allowed to charge fully at all engine speeds and to utilize instead the above described function of retarding the closing of the variable intake valve in order to regulate the torque. In the embodiment shown in Fig. 3 of the engine according to the invention, the valve arrangement described thus assumes both the throttle and waste-gate functions.

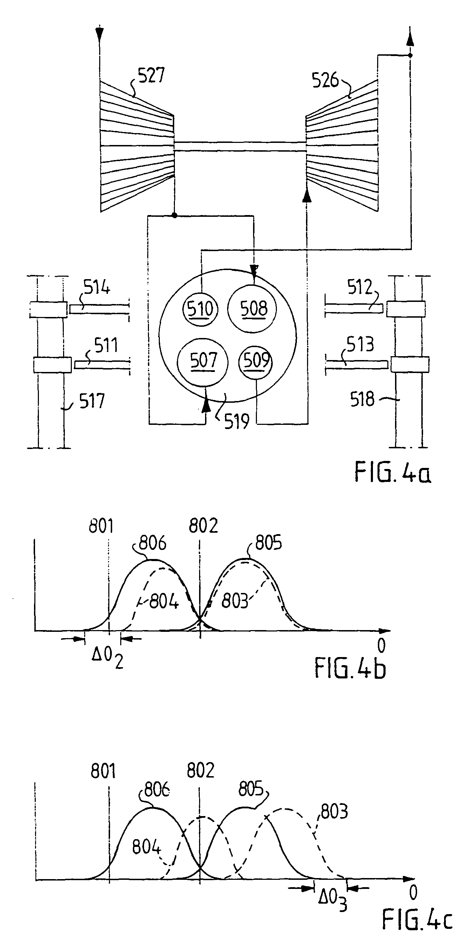

Fig. 4a shows an additional embodiment of a turbo-charged engine according to the invention differing from that described above only in that the exhaust port 510, which is opened and closed by the exhaust valve of the variable camshaft 517, opens to a conduit which leads past the turbine directly to the engine exhaust system. The entire exhaust amount, which exits through the exhaust port 509 during the entire exhaust stroke, is led through the turbine 526.

The engine torque is regulated by controlling the point in time for closing the intake valve 511 by phase shifting the camshaft 517 relative to the crankshaft 506.

In the embodiment in Fig. 4a, the variable exhaust valve is opened after the so-called "blow down pulse", i.e. the pulse until pressure equalization between the pressure in the cylinder and the pressure in the exhaust port, which normally occurs close to BDC. The phase shift for the variable exhaust valve 514 will vary in the same way as the phase shift for the variable intake valve 511, when the rotational phase of the camshaft 517 is shifted. It is therefore important to see to it that the variable exhaust valve 514 always opens after the non-variable exhaust valve 513 regardless of the phase difference between the camshafts 517 and 518. Thus the variable exhaust valve 514 should open at least 30° after the exhaust valve 513 when the intake valves 511 and 512 are in phase with each other. To make this possible, the open period of the variable exhaust valve 514 must be shorter than the open period of the exhaust valve 513. The diagram in Fig. 4b illustrates the valve lifts as a function of the crankshaft angle, where 801 represents BDC after the expansion stroke and 802 represents the subsequent TDC. The valve lift for the variable intake valve 511 and the valve lift for the variable exhaust valve 514 are illustrated by the dashed curves 803 and 804, respectively, while the valve lifts for the corresponding non-variable valves 512 and 513 are illustrated by the solid curves 805 and 806. In the diagram in Fig. 4b there is no phase shift between the camshafts. The difference in the opening times between the exhaust valves is at least 30 crankshaft degrees, which also represents the difference between the open periods of the valves.

Even in this embodiment of the engine according to the invention, the torque is thus regulated by controlling the rotational phase shift of the variable camshaft 517 relative to the crankshaft 506. The torque regulation is in this case similar to the embodiment shown in Fig. 3, but also includes letting out the remaining exhaust after the blow-down pulse past the turbine directly to the engine exhaust system. More specifically, the camshaft 518 opens the exhaust valve 513 first, releasing the blow-down pulse through the exhaust port 509 to the turbine 526. The variable exhaust valve 514 opens after the blow-down pulse directly to the exhaust system. At low torque, the variable intake valve 511 closes late, as in the previously described embodiments, and as is illustrated in Fig. 4c, which shows the valve lift curves 803-806 corresponding to Fig. 4b, but with a rotational phase shift of the variable cam-shaft 517. The variable valves are phase-shifted an angle of θ₃ towards later closing relative to the fixed valves.

In the embodiment in Fig. 4a, a significant amount of work can be performed during the gas exchange. The blow-down pulse through the turbine provides a high intake pressure, while the release of residual exhaust via the variable valve eliminates the counter-pressure from the turbine, which reduces the pumping work of the engine during the exhaust stroke.

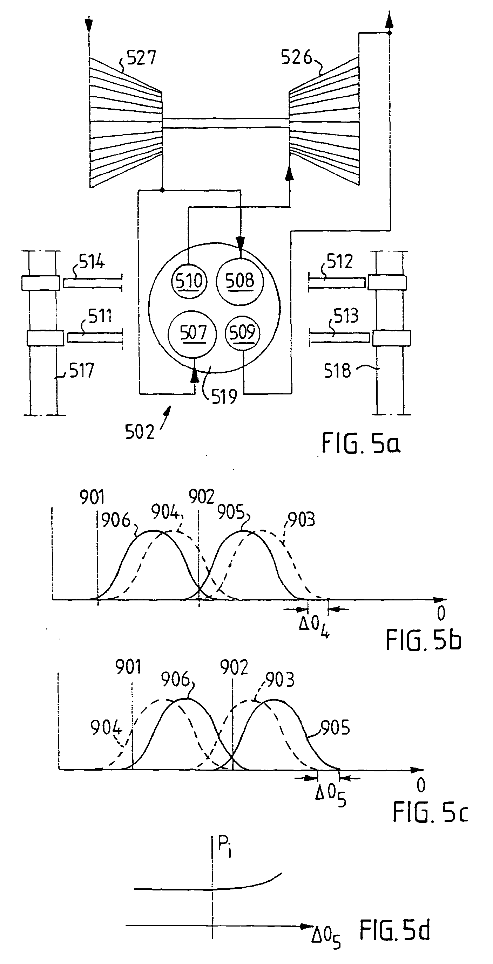

Fig. 5a shows a third embodiment of a turbo-charged engine according to the invention, in which the torque is regulated not only by regulating the closing of the variable inlet valve but also by regulating the opening of the variable exhaust valve. This embodiment differs from that described immediately above only in that the exhaust conduits from the two exhaust ports have traded places. When the two camshafts rotate in phase, the non-variable exhaust valve 513 opens towards the exhaust system at the same time as the variable exhaust valve 514 opens towards the turbine. Since work expended to push the exhaust out through the exhaust system is much less than that expended to force the exhaust through the turbine, practically the entire blow-down pulse will go past the turbine. A phase shift of the camshaft 517 to open the exhaust valve 514 later by an angle Δθ₄ than the exhaust valve 513, which is opened by the camshaft 518, does not change the blow-out sequence. This relationship is illustrated in Fig. 5b, where the valve lifts for the variable intake valve 511 and the variable exhaust valve 514 are shown by the dashed curves 903 and 904, respectively. The valve lifts for the non-variable valves 512 and 513 are shown by the solid curves 905 and 906, respectively. However, a phase shift of the lift curve of the intake valve 511 has the same effect as that described in connection with Fig. 2a, which means that a phase retardation, i.e. later valve closing, by shifting the rotational phase of the camshaft 517 e.g. by an angle Δθ₄, relative to the non-variable camshaft 518, results in a reduction in torque.

From a situation without phase shift between the camshafts, advancing instead of retarding the valve closing of the variable intake valve does not affect the point in time when the cylinder is closed for intake, since the valve which closes last is in this case the non-variable valve. A result of this is thus that the degree of advancing the lift curve has little, if any, effect on the amount of fuel-air mixture enclosed in the combustion chamber. A valve lift diagram with a phase advance of the camshaft 517 relative to the camshaft 518 is shown in Fig. 5c with the same reference numerals as in Fig. 5b. If Δθ₄ in Fig. 5b has a positive value, Δθ₅ in Fig. 5c has a negative value. The phase advance of the camshaft 517 has, however, another effect. Since the exhaust valve 514 opens prior to the exhaust valve 513, some or all of the blow-down pulse from the exhaust port 510 will be directed to the turbine 526. The degree of advance Δθ₄ from 0° results in increased torque up to a limit when the blow-down pulse is over. As was mentioned above, the entire blow-down pulse can hard-ly be used since the charge pressure on the compressor 527 would then be too high.

The torque in the engine embodiment shown in Fig. 5a can thus be regulated both by phase retarding and phase advancing the camshaft 517 relative to the camshaft 518. Retarding from zero shift reduces the fuel-air mass in the cylinder, while advancing increases the charge pressure. The intake pressure pᵢ as a function of the phase shift Δθ₅ is illustrated in Fig. 5d, from which it is evident that the intake pressure is essentially constant at 1 atmosphere for any phase retardation, which is illustrated to the left in the figure. Phase advance from 0°, which is illustrated to the right in the figure, increases the charge pressure and thus the torque.

In order to control the torque by phase shifting one camshaft relative to the crankshaft, there is suitably used a control unit of the type which, in today's fuel injection engines, controls the fuel injection and the ignition as a function of signals fed into the control unit, which represent various engine and vehicle data. Fig. 6 shows schematically a control unit 28 comprising a control computer into which signals are fed from a sensor 529 which senses accelerator pedal position and a sensor (not shown) which senses the engine speed. With the aid of these and possibly additional data, the control unit computes the torque requested by the driver and sends a signal to the phase variator 523 to shift the phase of the camshaft 517 relative to the crankshaft, so that the engine produces the requested torque or a corrected torque as a function of e.g. an anti-spin and anti-skid system.

Instead of placing a phase variator 523 on the non-variable camshaft 518 and phase-shifting via the chain or belt drive 525, as shown in Fig. 1b, a previously known type of phase variator can be used, which phase-shifts the camshaft 517 relative to its own cam drive 524. Such a phase variator is shown in Fig. 7. The camshaft 517 is in this case provided with straight splines 530 at one end. A gear 531 has interior splines which engage the splines of the camshaft, which means that the gear 531 is displaceably but non-rotatably mounted on the camshaft 517. The gear 531 is made in one piece with a plunger 532 in a hydraulic cylinder 533 and has outer helical teeth 534, which engage in corresponding interior helical teeth 535 on the cam drive 524 which, in the embodiment shown, is a sprocket. In response to the signal from the control unit 528, the plunger 532 is moved by means of a hydraulic circuit (not shown) to an axial position which provides the phase shift between the camshaft 517 and the cam drive 524 which is required for the requested torque.

The invention has been described above with reference to four different embodiments, in which the rotational phase shift of only one of the camshafts is varied relative to the crankshaft. Within the scope of the invention, however, it is also of course conceivable to phase-shift both camshafts to control the torque. For example, instead of phase-shifting one camshaft a certain angle in one direction, it is possible to phase-shift both camshafts in opposite directions half of the angle in order to obtain the same total opening time as in the first case. By phase-shifting both camshafts relative to the crankshaft, the torque can be controlled by a combination of the technique described in connection with Fig. 4 and the technique described in connection with Fig. 5.

## Claims

1. Four-stroke internal combustion engine for a motor vehicle, said engine having at least one cylinder (501) which has at least two intake valves (511,512), at least one exhaust valve (509) and at least two camshafts (517,518) arranged for controlling the opening and closing of one intake valve each, at least one of said camshafts being coordinated with means (523) for varying the rotational phase shift of the camshaft relative to the rotational phase of a crankshaft driven by a piston in the cylinder, wherein an exhaust channel (Fig. 3) from each cylinder (501) communicates with the inlet to the turbine (526) of a turbo compressor, the compressor (527) of which has an outlet in communication with an intake channel to the cylinder **characterized by** regulator means (528) which are arranged to regulate the means (523) for varying the rotational phase shift of a camshaft as a function of a torque requested by the vehicle driver in such a manner that the associated intake valve (511,512) opens and closes at another point in time than the other intake valve when low torque is requested, thereby controlling the torque without using a throttle.

2. Internal combustion engine according to claim 1, **characterized in that** each cylinder (501) has an exhaust channel (Fig. 5a) which communicates with the inlet to the turbine (526) of a turbo compressor, an exhaust channel which communicates with a conduit by-passing the turbine, and two intake channels communicating with the outlet of the compressor (527).

3. Internal combustion engine according to claim 2, **characterized in that** the exhaust channel, which is controlled by the exhaust valve (513) of the non-variable cam-shaft, by-passes the turbine (526).

4. Internal combustion engine according to Claim 2, **characterized in that** the exhaust channel, which is controlled by the exhaust valve (514) of the variable camshaft, by-passes the turbine (527).

5. Internal combustion engine according to one of claims 1-4, **characterized in that** said means (523) for varying the rotational phase shift of the camshaft (517,518) are disposed so that the rotational phase of the camshaft can be shifted within an interval on the order of at least 100 crankshaft degrees.

## Patentansprüche

1. Viertakt-Verbrennungsmotor für ein Kraftfahrzeug, wobei der Motor wenigstens einen Zylinder (501) hat, der wenigstens zwei Einlassventile (511, 512), wenigstens ein Auslassventil (509) und wenigstens zwei Nockenwellen (517, 518) hat, die zum Steuern des Öffnens und Schließens jeweils eines Einlassventils eingerichtet sind, wobei wenigstens eine der Nockenwellen mit einer Einrichtung (523) zum Ändern der Drehphasenverschiebung einer Nockenwelle relativ zu der Drehphase einer von einem Kolben in dem Zylinder angetriebenen Kurbelwelle koordiniert ist, ein Auslasskanal (Fig. 3) von jedem Zylinder (501) mit dem Einlass in die Turbine (526) eines Turbo-Kompressors in Verbindung steht, dessen Kompressor (527) einen Auslass hat, der mit einem Einlasskanal in den Zylinder in Verbindung steht, **gekennzeichnet durch** eine Reguliereinrichtung (528), die zum Regulieren der Einrichtung (523) zum Ändern der Drehphasenverschiebung einer Nockenwelle als Funktion eines Drehmoments eingerichtet ist, das von dem Fahrzeugführer angefordert wird, und zwar so, dass sich das dazugehörige Einlassventil (511, 512) zu einem anderen Zeitpunkt öffnet und schließt als das andere Einlassventil, wenn niedriges Drehmoment angefordert wird, um so das Drehmoment ohne Verwendung einer Drosselklappe zu steuern.

2. Verbrennungsmotor nach Anspruch 1, **dadurch gekennzeichnet, dass** jeder Zylinder (501) einen Auslasskanal (Fig. 5), der mit den Einlass in die Turbine (526) eines Turbo-Kompressors in Verbindung steht, einen Auslasskanal, der mit einer Leitung in Verbindung steht, die die Turbine umgeht, sowie zwei Einlasskanäle hat, die mit dem Auslass des Kompressors (527) in Verbindung stehen.

3. Verbrennungsmotor nach Anspruch 2, **dadurch gekennzeichnet, dass** der Auslasskanal, der durch das Auslassventil (513) der unveränderlichen Nockenwelle gesteuert wird, die Turbine (526) umgeht.

4. Verbrennungsmotor nach Anspruch 2, **dadurch gekennzeichnet, dass** der Auslasskanal, der durch das Auslassventil (514) der veränderlichen Nockenwelle gesteuert wird, die Turbine (527) umgeht.

5. Verbrennungsmotor nach einem der Ansprüche 1 bis 4, **dadurch gekennzeichnet, dass** die Einrichtung (523) zum Ändern der Drehphasenverschiebung der Nockenwelle (517, 518) so angeordnet ist, dass die Drehphase der Nockenwelle innerhalb eines Intervalls in der Größenordnung von wenigstens 100 Kurbelwellengrad verschoben werden kann.

## Revendications

1. Un moteur à combustion interne à quatre temps pour un véhicule à moteur, ledit moteur ayant au moins un cylindre (501) lequel possède au moins deux soupapes d'admission (511, 512), au moins une soupape d'échappement (509) et au moins deux arbres à cames (517, 518) agencés pour commander l'ouverture et la fermeture d'une soupape d'admission chacun, au moins un desdits arbres à cames étant coordonné avec des moyens (523) permettant de varier le décalage de phase de rotation de l'arbre à cames par rapport à la phase de rotation d'un vilebrequin actionné par un piston dans le cylindre, dans lequel un tuyau d'échappement (fig. 3) à partir de chaque cylindre (501) communique avec l'entrée vers la turbine (256) d'un turbo compresseur, dont le compresseur (527) possède une sortie en communication avec un tuyau d'admission vers le cylindre **caractérisé par** des moyens régulateurs (528) qui sont agencés pour ajuster les moyens (523) permettant de varier le décalage de phase de rotation d'un arbre à cames en fonction d'un couple demandé par le conducteur de véhicule de manière à ce que la soupape d'admission associée (511, 512) ouvre et ferme à un moment différent de celui de l'autre soupape d'admission lorsqu'un couple faible est demandé, pouvant ainsi commander le couple sans utiliser de papillon des gaz.

2. Un moteur à combustion interne selon la revendication 1, **caractérisé en ce que** chaque cylindre (501) possède un tuyau d'échappement (fig. 5a) qui communique avec l'entrée vers la turbine (526) d'un turbo compresseur, un tuyau d'échappement qui communique avec une conduite contournant la turbine, et deux tuyaux d'admission communiquant avec la sortie du compresseur (527).

3. Un moteur à combustion interne selon la revendication 2, **caractérisé en ce que** le tuyau d'échappement, qui est commandé par la soupape d'échappement (513) de l'arbre à cames non variable, contourne la turbine (526).

4. Un moteur à combustion interne selon la revendication 2, **caractérisé en ce que** le tuyau d'échappement, qui est commandé par la soupape d'échappement (514) de l'arbre à cames variable, contourne la turbine (527).

5. Un moteur à combustion interne selon l'une des revendications 1-4, **caractérisé en ce que** lesdits moyens (523) permettant de varier le décalage de phase de rotation de l'arbre à cames (517, 518) sont disposés afin que la phase de rotation de l'arbre à cames puisse être changée dans les limites d'un intervalle de l'ordre d'au moins 100 degrés de vilebrequin.
